# FASCICULE DE BREVET EUROPEEN

(11) **EP 2 954 413 B1**
(45) Date de publication et mention de la délivrance du brevet: **10.11.2021**
(21) Numéro de dépôt: 14706899.3
(22) Date de dépôt: 06.02.2014
(51) Int. Cl.: G06F 9/50, G06F 9/54, H04L 29/08, H04W 4/60

(54) **COMMUNICATION ENTRE UNE INSTANCE D'UNE APPLICATION WEB CONNECTEE A UN SERVEUR DE CONNEXION ET UNE ENTITE APPELANTE AUTRE QUE LEDIT SERVEUR DE CONNEXION**
KOMMUNIKATION ZWISCHEN EINER WEB-APPLIKATIONSINSTANZ, DIE AN EINEM VERBINDUNGSSERVER ANGESCHLOSSEN IST, UND EINER ANRUFENDEN ENTITAET, DIE ANDERS ALS DIESEN VERBINDUNGSSERVER IST
COMMUNICATION BETWEEN AN INSTANCE OF A WEB-APPLICATION CONNECTED TO A CONNECTION SERVER AND A CALLING ENTITY DIFFERENT FROM SAID SERVER

(30) Priorité: 07.02.2013 FR 1351071
(43) Date de publication de la demande: 16.12.2015
(73) Titulaire: ORANGE, 92130 Issy-les-Moulineaux (FR)
(72) Inventeur: BERTIN, Emmanuel, F-14530 Luc Sur Mer (FR); CAZEAUX, Stéphane, F-14280 Authie (FR)
(86) Numéro de dépôt international: PCT/FR2014/050225
(87) Numéro de publication internationale: WO 2014/122402

(56) Documents cités:
- US-A1- 2008 263 126
- US-B1- 6 883 015
- SAZALI H MUHAMMAD ET AL: "Cross-domain data exchanges for web application", WIRELESS COMMUNICATIONS AND APPLICATIONS (ICWCA 2012), IET INTERNATIONAL CONFERENCE ON, IEEE, 8 octobre 2012 (2012-10-08), pages 1-6, XP032433795, DOI: 10.1049/CP.2012.2099 ISBN: 978-1-84919-550-8
- ROSENBERG CISCO J: "Obtaining and Using Globally Routable User Agent (UA) URIs (GRUU) in the Session Initiation Protocol (SIP); draft-ietf-sip-gruu-15.txt", OBTAINING AND USING GLOBALLY ROUTABLE USER AGENT (UA) URIS (GRUU) IN THE SESSION INITIATION PROTOCOL (SIP); DRAFT-IETF-SIP-GRUU-15.TXT, INTERNET ENGINEERING TASK FORCE, IETF; STANDARDWORKINGDRAFT, INTERNET SOCIETY (ISOC) 4, RUE DES FALAISES CH- 1205, vol. sip, no. 15, 11 octobre 2007 (2007-10-11), XP015058968,
- Sebastien Cubaud: "IDSER: Inter-Domain Service Enabler for RTC-Web", ETSI Future Network Technologies Workshop 2011, Sophia Antipolis, 26-27 September 2011, 26 septembre 2011 (2011-09-26), pages 1-17, XP055098314, Sophia Antipolis, France Extrait de l'Internet: URL:http://docbox.etsi.org/workshop/2011/2 01109_FUTURENETWORKS/04_TAKINGCAREOFTHEEND USER/ORANGELABS_CUBAUD_IDSER.pdf [extrait le 2014-01-24]
- LIN LI ET AL: "Research on the integration of RTCWeb technology with IP multimedia subsystem", IMAGE AND SIGNAL PROCESSING (CISP), 2012 5TH INTERNATIONAL CONGRESS ON, IEEE, 16 octobre 2012 (2012-10-16), pages 1158-1161, XP032336306, DOI: 10.1109/CISP.2012.6469705 ISBN: 978-1-4673-0965-3
- ROSENBERG M KAUFMAN M HIIE F AUDET SKYPE J: "An Architectural Framework for Browser based Real-Time Communications (RTC); draft-rosenberg-rtcweb-framework-00.txt", AN ARCHITECTURAL FRAMEWORK FOR BROWSER BASED REAL-TIME COMMUNICATIONS (RTC); DRAFT-ROSENBERG-RTCWEB-FRAMEWORK-00.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAN, 8 février 2011 (2011-02-08), pages 1-13, XP015073876,
- None

## Description

L'invention se situe dans le domaine des télécommunications et plus particulièrement dans le domaine des applications Web.

De façon connue, une application Web (ou « webapp » en anglais) est un logiciel téléchargé au sein d'une instance d'un navigateur d'un terminal d'un utilisateur et s'exécute au sein de la même instance du navigateur dudit terminal.

Egalement, de façon connue, un navigateur permet de communiquer avec le monde du Web, c'est-à-dire de communiquer avec des serveurs distants via le réseau Internet.

Un mécanisme appelé webRTC (pour « web Real Time Communication » en anglais) permet de réaliser des communications temps réel entre deux navigateurs. Une application web téléchargée sur chaque navigateur permet d'émettre et de recevoir des flux de communication.

Les mécanismes permettant de recevoir et d'émettre des appels ne sont pas spécifiés dans les travaux webRTC et laissés à l'implémentation de chaque fournisseur de service.

Les mécanismes actuels pour émettre ou recevoir des appels utilisent des applications web basées sur des protocoles existants, par exemple SIP ou XMPP, implémentant une pile protocolaire. Ces mécanismes ne permettent pas de faire communiquer deux applications web de deux opérateurs différents.

Des travaux émergents cherchent à réaliser des services de communication basés sur un protocole websocket, défini par l'IETF (pour « Internet Engineering Task Force ») dans la RFC (pour « Request For Comments ») 6455. Le protocole websocket permet d'établir et de disposer d'un canal de communication entre un navigateur et un serveur distant, typiquement un serveur web. Ce canal de communication appelé « connexion websocket » est un canal bidirectionnel et full-duplex, c'est-à-dire un canal bidirectionnel pour lequel l'envoi et la réception peuvent s'effectuer simultanément entre les navigateurs et les serveurs web. Ce protocole est basé sur le protocole TCP (pour « Transmission Control Protocol » en anglais) pour le transport des données. Il permet de notifier une application web installée sur un navigateur, d'un changement d'état du serveur et d'envoyer des données en mode « push » du serveur vers l'application web sans que celle-ci ait à effectuer une requête.

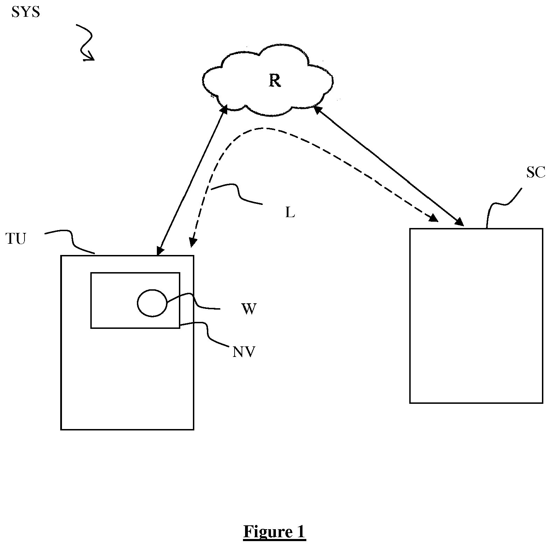

La figure 1 représente un système SYS de l'état de l'art.

Le système SYS comprend un terminal d'utilisateur TU, un serveur de connexion SC et un serveur S aptes à accéder à un réseau de communication R.

Le terminal TU comprend un navigateur NV pour accéder au réseau Internet.

Une instance d'une application web W a été installée dans le navigateur NV lors d'une étape préalable. L'installation de l'instance d'application web W est classiquement effectuée par accès à un serveur (non représenté) et téléchargement de l'instance d'application à partir de ce serveur.

L'instance d'application téléchargée W contient l'adresse du serveur de connexion SC.

Lors d'un lancement d'une exécution de l'instance d'application web W, une requête d'établissement de connexion est transmise au serveur de connexion SC.

Suite à la réception de cette requête d'établissement de connexion, un canal de communication L est établi entre le serveur de connexion SC et l'instance d'application web W via le réseau de télécommunication R et le navigateur NV du terminal TU.

Dans cette architecture, seul le serveur de connexion SC sait identifier l'instance d'application web W qui lui est connectée. Il n'est actuellement pas possible à une autre entité, telle que par exemple le serveur S, une instance d'une application web connectée à un autre serveur de connexion ou à une autre instance d'application de joindre l'application web W. Par exemple, il n'est pas possible d'envoyer une notification ou d'appeler l'application web W.

La demande de brevet US 2008/263126 A1 décrit une technique de communication permettant d'accéder à une ressource distante, e.g. une application web, hébergée sur une machine n'ayant pas d'adresse IP statique. En particulier, D1 enseigne de créer, pour chaque ressource distante, un identifiant "global URL" comportant l'adresse IP d'un serveur d'accueil ("master server"), un identifiant de la ressource et un identifiant de la machine ("CSD") hébergeant cette ressource. Cet identifiant "global URL" est alors utilisée pour envoyer une requête à la ressource à partir de n'importe quel ordinateur connecté à Internet via le serveur d'accueil identifié au sein dudit identifiant.

Il existe donc un besoin pour une entité autre que le serveur de connexion auquel une instance d'application est rattachée de joindre cette instance d'application.

L'invention vient améliorer la situation.

L'invention est spécifiée par les revendications indépendantes annexées. En outre, des modes de réalisation préférés sont définis par les revendications dépendantes.

A cet effet, l'invention se rapporte à un procédé de communication entre une entité appelante et une instance d'une application téléchargée sur un terminal utilisateur et apte à être connectée à un serveur de connexion, caractérisé en ce qu'il comporte les étapes suivantes, mises en œuvre dans l'entité appelante :
- obtention d'un identifiant d'instance de ladite instance d'application, ledit identifiant comportant un premier et un deuxième identifiant, le deuxième identifiant étant un pointeur vers un serveur d'accueil et le premier identifiant représentant ladite instance au niveau dudit serveur d'accueil ;
- transmission d'une notification à destination de ladite instance d'application au moyen dudit identifiant d'instance obtenu.

L'identifiant d'instance permet d'identifier de façon unique l'instance d'application dans le réseau. Le deuxième identifiant permet d'adresser un serveur d'accueil. Le premier identifiant permet ensuite au serveur d'accueil d'identifier le serveur de connexion associé puis au serveur de connexion d'identifier l'instance d'application à contacter parmi les instances d'applications qui lui sont connectées.

Grâce à l'identifiant d'instance, une notification transmise par une entité du réseau peut être adressée à une instance d'une application. Il est ainsi possible à une entité appelante, telle qu'un serveur ou une autre instance d'une autre application, de joindre une instance d'application.

Selon un mode de réalisation particulier du procédé de communication, l'étape d'obtention comprend une étape d'envoi d'une requête d'identifiant d'instance comprenant un identifiant d'utilisateur et une étape de réception d'une réponse à ladite requête contenant ledit identifiant d'instance.

Un identifiant d'utilisateur est par exemple un numéro de téléphone ou une adresse de messagerie associée à un utilisateur. L'identifiant d'utilisateur est utilisé pour obtenir un identifiant d'instance d'une instance d'application exécutée par cet utilisateur.

L'identifiant d'instance est attribué pour une instance d'application connectée à un serveur de connexion. Il est en principe temporaire.

Selon un mode de réalisation particulier du procédé de communication, ladite instance d'application est une instance d'une première application connectée à un premier serveur de connexion et l'entité appelante est une instance d'une deuxième application connectée à un deuxième serveur de connexion.

Il est ainsi possible à une instance d'application de joindre une deuxième instance d'application.

Selon un mode de réalisation particulier du procédé de communication mis en oeuvre seul ou en combinaison avec les modes de réalisation précédent, l'étape d'obtention comprend une étape de réception d'un message contenant l'identifiant d'instance transmis par ladite instance d'application.

Dans ce mode de réalisation, l'identifiant d'instance déterminé lors de la connexion d'une instance d'application au serveur de connexion est transmis à l'instance d'application. L'instance d'application peut alors transmettre cet identifiant à une ou plusieurs entités distantes, par exemple des serveurs. La réception par une entité distante, d'un message contenant un identifiant d'instance permet à cette entité distante de joindre l'instance d'application associée à l'identifiant d'instance reçu.

La réception de l'identifiant d'instance émis à l'initiative d'une instance d'application est un moyen simple pour une entité appelante, par exemple un serveur ou une instance d'une autre application, d'obtenir ledit identifiant.

L'invention se rapporte également à un procédé de connexion mis en oeuvre par un serveur de connexion, caractérisé en ce qu'il comprend, suite à la réception d'une demande d'établissement de connexion en provenance d'une instance d'une application téléchargée sur un terminal d'un utilisateur, une étape de commande d'une détermination d'un identifiant d'instance d'application comportant un premier et un deuxième identifiant, le deuxième identifiant étant un pointeur vers un serveur d'accueil et le premier identifiant représentant ladite instance au niveau dudit serveur d'accueil.

L'identifiant d'instance déterminé lors de la connexion d'une instance d'application à un serveur de connexion permet à ladite instance d'application d'être jointe par une entité appelante.

Selon une caractéristique particulière du procédé de connexion, le deuxième identifiant est un nom de domaine associé au serveur d'accueil.

Un nom de domaine est un moyen simple d'adresser le serveur d'accueil.

Le nom de domaine associé au serveur d'accueil est un nom de domaine absolu ou relatif.

Dans le cas où le nom de domaine est un nom de domaine absolu du serveur de connexion, le serveur d'accueil est le serveur de connexion et les notifications sont directement transmises au serveur de connexion par une entité appelante ou un serveur de gestion de service de cette entité. La transmission des notifications est simple.

Un nom de domaine relatif permet de cacher l'architecture du domaine aux entités étrangères à ce domaine.

Selon un mode de réalisation particulier, le procédé de connexion comporte une étape de transmission dudit identifiant de ladite instance en vue de l'enregistrement dudit identifiant d'instance en association avec un identifiant d'utilisateur

L'enregistrement d'un identifiant d'instance en association avec un identifiant d'utilisateur permet à une entité distante d'obtenir un identifiant d'instance à partir d'un identifiant d'utilisateur. Cette entité peut ensuite utiliser cet identifiant d'instance pour joindre l'instance d'application pour laquelle l'identifiant d'instance a été attribué.

Selon un mode de réalisation particulier, le procédé de connexion comprend une étape d'analyse de la demande d'établissement de connexion reçue pour déterminer si elle comprend un identifiant d'instance et l'étape de commande d'une détermination d'un identifiant d'instance est exécutée si ladite demande d'établissement de connexion ne comprend pas d'identifiant d'instance.

Dans ce mode de réalisation, un identifiant d'instance attribué peut être réutilisé lors d'une connexion ultérieure de l'instance d'application au serveur de connexion.

Ceci évite de déterminer un nouvel identifiant d'instance à chaque connexion de l'instance d'application, c'est-à-dire à chaque fois que l'instance d'application est lancée.

La réutilisation d'un identifiant d'instance simplifie également la procédure de transmission de notification pour les entités appelantes.

Ce mode de réalisation est particulièrement adapté au cas où des coupures intempestives interviennent sur le canal de communication établi entre une instance d'application et un serveur de connexion.

Selon un mode de réalisation particulier, le procédé de connexion comprend une étape de réception d'une notification contenant ledit identifiant d'instance, une étape de transmission de ladite notification à ladite instance d'application.

Une notification émise par une entité appelante est reçue par le serveur de connexion et retransmise par celui-ci à l'instance d'application associée à l'identifiant d'instance.

Selon un mode de réalisation particulier, le procédé de connexion comprend, suite à la réception de la notification, une étape d'envoi d'un message de réveil au terminal utilisateur et une étape de réception d'une deuxième demande d'établissement de connexion, ladite demande comportant ledit identifiant d'instance.

Ce mode de réalisation est particulièrement adapté au cas où une instance d'application a été déconnectée du serveur de connexion. Le message de réveil transmis par le serveur de connexion au terminal permet de signaler à l'utilisateur l'arrivée d'une notification au niveau du serveur de connexion en absence de connexion de l'instance d'application. L'utilisateur peut alors commander la reprise de l'exécution de l'instance d'application, par exemple en lançant de nouveau l'exécution de l'instance d'application, permettant ainsi la restauration du canal de communication entre l'instance d'application et le serveur de connexion et la transmission par le serveur de connexion de la notification en attente.

L'invention se rapporte également à une entité appelante caractérisée en ce qu'elle comporte :
- un module d'obtention d'un identifiant d'instance d'une instance d'une application téléchargée sur un terminal utilisateur, ledit identifiant d'instance comportant un premier et un deuxième identifiant, le deuxième identifiant étant un pointeur vers un serveur d'accueil et le premier identifiant représentant ladite instance au niveau dudit serveur d'accueil ;
- un module de transmission d'une notification à destination de ladite instance d'application au moyen dudit identifiant d'instance obtenu.

L'invention se rapporte aussi à un serveur de connexion comprenant des moyens de réception d'une demande d'établissement de connexion en provenance d'une instance d'une application téléchargée sur un terminal d'un utilisateur, caractérisé en ce qu'il comprend un module de commande d'une détermination d'un identifiant d'instance d'application comportant un premier et un deuxième identifiant, le deuxième identifiant étant un pointeur vers un serveur d'accueil et le premier identifiant représentant ladite instance au niveau dudit serveur d'accueil.

L'invention se rapporte encore à un produit programme d'ordinateur comprenant des instructions pour mettre en oeuvre les étapes du procédé de communication tel que décrit précédemment, lorsqu'il est chargé et exécuté par un processeur.

L'invention se rapporte enfin à un produit programme d'ordinateur comprenant des instructions pour mettre en oeuvre les étapes du procédé de connexion tel que décrit précédemment, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :
- la figure 1 est un schéma illustrant un système de l'état de l'art antérieur,
- la figure 2 est un schéma illustrant un système selon un premier mode de réalisation de l'invention,
- la figure 3 est un organigramme illustrant les différentes étapes d'un procédé de communication et d'un procédé de connexion selon un premier mode de réalisation,
- la figure 4 est un schéma illustrant un système selon un deuxième mode de réalisation de l'invention,
- la figure 5 est un organigramme illustrant les différentes étapes d'un procédé de communication et d'un procédé de connexion selon un deuxième mode de réalisation,
- la figure 6 est un schéma illustrant un système selon un troisième mode de réalisation de l'invention,
- la figure 7 est un organigramme illustrant les différentes étapes d'un procédé de communication et d'un procédé de connexion selon un troisième mode de réalisation,
- la figure 8 est un schéma illustrant un système selon un quatrième mode de réalisation de l'invention,
- la figure 9 est un organigramme illustrant les différentes étapes d'un procédé de communication et d'un procédé de connexion selon un quatrième mode de réalisation.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit ci-dessous pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique (terminal, serveur, passerelle, set-top-box, routeur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou avec processeur intégré pour l'exécution de logiciel, par exemple un circuit intégré, une carte à puce, une carte électronique pour l'exécution d'un micrologiciel (firmware), etc.

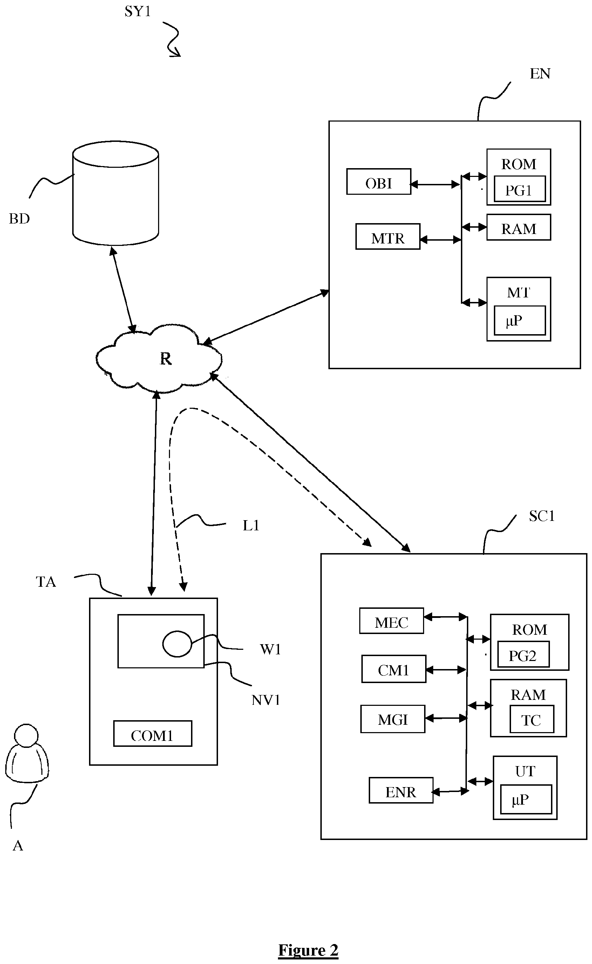

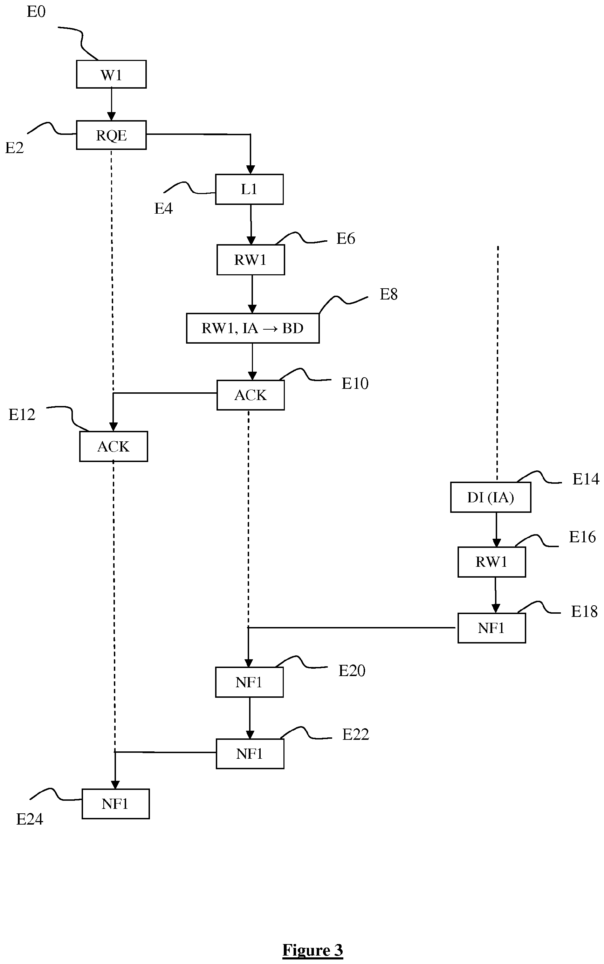

Un premier mode de réalisation d'un procédé de communication et d'un procédé de connexion va maintenant être décrit en référence aux figures 2 et 3.

En référence à la figure 2, un système SY1 comprend un terminal TA d'un utilisateur A, un serveur de connexion SC1, une entité appelante EN et une base de données BD aptes à communiquer entre eux via un réseau de communication R.

Le réseau de communication R comprend le réseau Internet et/ou un réseau Intranet.

Le terminal TA est par exemple un ordinateur de type PC.

A titre d'alternative, le terminal TA est un terminal mobile.

Plus généralement, le terminal TA est un équipement apte à accéder au réseau R au moyen d'un navigateur.

Le terminal TA contient un navigateur NV1 et un module de communication COM1 avec le réseau R.

Le navigateur NV1 est un navigateur web, c'est-à-dire un logiciel conçu pour consulter le World Wide Web.

L'entité appelante EN est par exemple un serveur.

A titre d'alternative, l'entité appelante EN est par exemple un ordinateur de type PC, un terminal mobile, une application web...

Plus généralement, l'entité appelante EN est une entité apte à communiquer avec le réseau de communication R, et plus particulièrement à accéder au réseau Internet.

Le serveur EN comporte de façon connue, notamment une unité de traitement MT équipée d'un microprocesseur, une mémoire morte de type ROM, une mémoire vive de type RAM. L'entité appelante EN peut comporter de manière classique et non exhaustive les éléments suivants: un clavier, un écran, un microphone, un haut-parleur, un lecteur de disque, un moyen de stockage...

La mémoire morte de type ROM comporte des registres mémorisant un programme d'ordinateur PG1 comportant des instructions de programme adaptées à mettre en oeuvre un procédé de communication selon un mode de réalisation de l'invention décrit ultérieurement en référence à la figure 3.

L'entité appelante EN comporte également un module d'obtention d'identifiant d'instance OBI et un module de transmission MTR.

Le serveur de connexion SC1 est par exemple un serveur et comporte de façon connue, notamment une unité de traitement UT équipée d'un microprocesseur, une mémoire morte de type ROM, une mémoire vive de type RAM.

La mémoire morte de type ROM comporte des registres mémorisant un programme d'ordinateur PG2 comportant des instructions de programme adaptées à mettre en oeuvre un procédé de connexion selon un mode de réalisation de l'invention décrit ultérieurement en référence à la figure 3.

Le serveur de connexion SC1 comporte un module de communication CM1 pour la communication avec d'autres entités du système SY1 via le réseau R, un module d'établissement de canal MEC, un module de commande de détermination d'identifiant d'instance MGI et un module d'enregistrement ENR.

Un premier mode de réalisation d'un procédé de communication et d'un procédé de connexion va maintenant être décrit en référence à la figure 3.

Lors d'une étape préalable E0, suite à une action de l'utilisateur A, une instance W1 d'une application web est téléchargée sur le terminal TA.

De façon connue, l'instance de l'application W1 est reçue et enregistrée par le navigateur NV1 du terminal TA en réponse à une requête de téléchargement transmise par le navigateur NV1 du terminal TA à destination d'un serveur de téléchargement (non représenté).

L'instance d'application reçue W1 comprend en paramètre une adresse AD1 du serveur de connexion SC1.

L'adresse AD1 est par exemple une URL (pour « Uniform Resource Locator » en anglais) associée au serveur de connexion SC1.

A titre d'alternative, l'instance d'application W1 comprend plusieurs adresses de plusieurs serveurs de connexion.

Egalement à titre d'alternative, l'instance d'application W1 comprend en paramètre une adresse d'un serveur de gestion de service (non représenté).

Lors d'une étape E2, suite par exemple à une action de l'utilisateur A pour lancer l'exécution de l'instance d'application W1, l'instance d'application W1 envoie une requête d'établissement de connexion RQE au serveur de connexion SC1 au moyen de l'adresse AD1 reçue en paramètre lors du téléchargement de l'instance d'application W1.

La requête RQE est transmise via le module COM1 du terminal TA et le réseau R.

A titre d'alternative, l'adresse AD1 du serveur de connexion SC1 n'est pas reçue lors de la phase de téléchargement et l'adresse AD1 du serveur de connexion SC1 est reçue par l'instance d'application W1 en réponse à une demande d'adresse effectuée auprès d'un serveur de gestion de service dont l'adresse a été reçue en paramètre lors du téléchargement.

Egalement, à titre d'alternative, l'adresse AD1 du serveur de connexion SC1 est obtenue par une recherche de type DNS (pour « Domain Name System » en anglais).

La requête d'établissement de connexion RQE est reçue par le module CM1 du serveur de connexion SC1 lors d'une étape E4 et le module d'établissement de canal MEC du serveur de connexion SC1 établit un canal de communication L1 avec le navigateur NV1. Le canal de communication L1 est par exemple une connexion de type Websocket.

Le canal de communication L1 permet, de façon connue, une communication entre le serveur de connexion SC1 et le navigateur NV1 et, en conséquence une communication entre le serveur de connexion SC1 et l'instance d'application W1.

Lors d'une étape E6, le module MGI de commande de détermination d'identifiant d'instance du serveur de connexion SC1 commande la détermination d'un identifiant d'instance RW1 pour l'instance d'application W1.

Dans le mode de réalisation décrit, l'identifiant d'instance RW1 est déterminé par le serveur de connexion SC1.

A titre d'alternative, l'identifiant d'instance RW1 est déterminé par un serveur d'accueil ou un serveur central.

L'identifiant d'instance RW1 comprend un premier identifiant ID1 et un deuxième identifiant ID2.

Le deuxième identifiant ID2 permet d'identifier un serveur d'accueil au sein du réseau R. C'est un pointeur vers ce serveur d'accueil. Le serveur d'accueil est un serveur de connexion ou un autre serveur.

Dans le cas où le serveur d'accueil n'est pas le serveur de connexion associé à l'instance d'application, le premier identifiant ID1 est une valeur ou une chaine de caractères permettant d'une part au serveur d'accueil d'identifier un serveur de connexion et d'autre part, au serveur de connexion identifié d'identifier le canal de communication L1.

Le premier identifiant ID1 représente de façon unique l'instance d'application web W1 au niveau du serveur d'accueil.

Il permet au serveur de connexion SC1 d'identifier le canal de communication L1 et, en conséquence l'instance d'application web W1 parmi les instances d'application qui lui sont connectées. Il constitue un pointeur local vers le canal de communication L1.

Dans le mode de réalisation décrit où le serveur de connexion SC1 représente un serveur d'accueil, le deuxième identifiant ID2 permet d'identifier le serveur de connexion SC1 au sein du réseau R et le premier identifiant ID1 est une valeur ou une chaine de caractères permettant au serveur de connexion SC1 d'identifier le canal de communication L1.

Le deuxième identifiant ID2 est par exemple un nom de domaine associé au serveur de connexion SC1.

Le deuxième identifiant ID2 est par exemple un nom de domaine absolu, appelé également FQDN (« nom de domaine complètement qualifié » ou « Fully Qualified Domain Name » en anglais), c'est-à-dire un nom de domaine qui indique la position absolue d'un noeud représentant le serveur de connexion SC1 dans l'arborescence du réseau R en indiquant tous les domaines de niveau supérieur jusqu'à la racine.

Par exemple, le deuxième identifiant ID2 est « serveur45.communications.orange.fr ».

A titre d'alternative, le deuxième identifiant est un nom de domaine relatif, par exemple «communications.orange.fr ». Dans cette variante, la génération du premier identifiant ID1 est par exemple centralisée au sein du domaine. Le premier serveur de connexion SC1 doit se référer à une entité centrale, par exemple une base de données, pour obtenir tout ou partie du premier identifiant ID1.

Egalement, à titre d'alternative, le premier identifiant ID1 est déterminé selon des règles de détermination prédéfinies. Par exemple, chaque premier identifiant ID1 comporte un préfixe identifiant le serveur de connexion SC1. Selon un autre exemple, des plages de numéros sont attribuées à chaque serveur de connexion par un serveur central et le serveur de connexion SC1 attribue le premier identifiant ID1 en fonction de la plage attribuée.

L'identifiant d'instance RW1 est par exemple obtenu par concaténation du premier identifiant ID1 et du deuxième identifiant ID2.

L'identifiant d'instance est par exemple une URI (pour « Uniform Resource Identifier » en anglais).

L'identifiant d'instance RW1 est par exemple de la forme : « rsi : ID1@ID2 » dans lequel «rsi » est un terme identifiant un identifiant d'instance.

Le serveur de connexion SC1 enregistre dans une table de correspondance TC du serveur de connexion SC1, l'identifiant d'instance RW1 en association avec un identifiant de connexion IC.

L'identifiant de connexion IC est une valeur ou une chaine de caractères permettant au serveur de connexion SC1 de retrouver parmi différents canaux de connexion établis, le canal de communication L1 associé à l'instance d'application W1.

L'identifiant de connexion IC est par exemple un identifiant du canal de communication L1.

Lors d'une étape E8, le module d'enregistrement ENR du serveur de connexion SC1 commande l'enregistrement de l'identifiant d'instance RW1 en association avec un identifiant d'utilisateur IA dans la base de données BD.

L'identifiant d'utilisateur IA est un identifiant de joignabilité de l'utilisateur A, par exemple un numéro de téléphone d'un terminal de l'utilisateur A, par exemple du terminal TA ou une adresse de messagerie de l'utilisateur A. L'identifiant d'utilisateur IA est propre à l'utilisateur A. Il permet d'identifier de façon unique l'utilisateur A.

L'identifiant d'utilisateur IA est par exemple contenu dans la requête d'établissement de connexion RQE.

A titre d'alternative, l'identifiant d'utilisateur IA est par exemple obtenu en réponse à une requête d'identifiant utilisateur transmise à un serveur d'identité (non représenté) et contenant une preuve d'identité de l'utilisateur A. La preuve d'identité est par exemple obtenue lors d'une phase préalable d'authentification de l'utilisateur A, à l'aide par exemple d'un couple login/password, et transmise dans la requête d'établissement de connexion RQE.

A titre d'alternative, l'enregistrement de l'identifiant d'instance RW1 et l'obtention de l'identifiant utilisateur IA sont effectués par un serveur d'enregistrement (non représenté) et l'étape E8 est une étape d'envoi à ce serveur d'enregistrement d'une demande d'enregistrement de l'instance d'application web W1. La demande d'enregistrement contient l'identifiant d'instance RW1 généré lors de l'étape E6.

A titre d'alternative, la demande d'enregistrement contient également des informations propres au service

Lors d'une étape E10, le serveur de connexion SC1 envoie un message d'acquittement ACK à l'instance d'application W1via le canal de communication L1 et le navigateur NV1.

Le message d'acquittement ACK constitue une preuve de l'établissement du canal de communication L1.

Le message d'acquittement ACK contient l'identifiant d'instance RW1.

A titre d'alternative, le message d'acquittement ACK ne contient pas l'identifiant d'instance RW1.

Le message d'acquittement ACK est reçu par l'instance d'application W1 lors d'une étape E12 et un message indiquant à l'utilisateur que la connexion est établie est par exemple affiché sur une interface graphique du navigateur NV1.

Lors d'une étape E14, ultérieure à l'étape E12, le module d'obtention d'identifiant d'instance OBI de l'entité appelante EN envoie à la base de données BD, une demande DI d'identifiant d'instance pour l'utilisateur A. La demande DI contient l'identifiant IA de l'utilisateur A.

Lors d'une étape E16, le module d'obtention d'identifiant d'instance OBI obtient en réponse à la demande DI, l'identifiant d'instance RW1 enregistré en association avec l'identifiant d'utilisateur IA dans la base de données BD.

Lors d'une étape E18, le module de transmission MTR de l'entité appelante EN envoie une notification NF1 contenant l'identifiant d'instance RW1 à destination de l'instance d'application W1 via le réseau R.

De façon connue, la notification NF1 contient ou est associée à une adresse d'émetteur et une adresse de destination.

L'adresse d'émetteur est une adresse de l'entité appelante EN.

L'adresse de destination est l'identifiant d'instance RW1.

La notification NF1 contient également un message M sous forme d'une chaine de caractères.

A titre d'alternative, la notification NF1 est une demande d'établissement d'un flux bidirectionnel audio et/ou vidéo, par exemple une conversation téléphonique, ou la transmission d'un contenu audio et/ou vidéo.

L'identifiant d'instance RW1, et en conséquence l'adresse de destination de la notification NF1 contient le deuxième identifiant ID2. Le deuxième identifiant ID2 correspondant à une adresse du serveur de connexion SC1, la notification NF1 est transmise au serveur de connexion SC1 et reçue par le serveur de connexion SC1, lors d'une étape E20.

Lors d'une étape E22, le serveur de connexion SC1 transfère la notification NF1 à l'instance d'application W1 via le canal de communication L1.

L'étape E22 comprend par exemple l'extraction de la notification NF1, du premier identifiant ID1 de l'identifiant d'instance RW1 et l'obtention de l'identifiant de connexion IC par consultation de la table de correspondance TC.

Lors d'une étape E24, l'instance d'application W1 reçoit la notification NF1 et le contenu de la notification NF1 est traité par l'application d'instance W1.

Par exemple, le message M est affiché sur l'écran du terminal TA.

A titre d'alternative, la notification NF1 est un appel téléphonique et lors de la réception de la notification NF1, l'instance d'application W1 signale l'appel à l'utilisateur du terminal TA et si l'utilisateur répond, un processus d'établissement d'appel est exécuté. La communication est par exemple établie selon un protocole WebRTC (« web Real-Time Communication »).

Les étapes E14, E16 et E18, mises en oeuvre par l'entité appelante EN, représentent les étapes du procédé de communication.

Les étapes E4, E6, E8 et E10, mises en oeuvre par le serveur de connexion SC1, représentent les étapes du procédé de connexion.

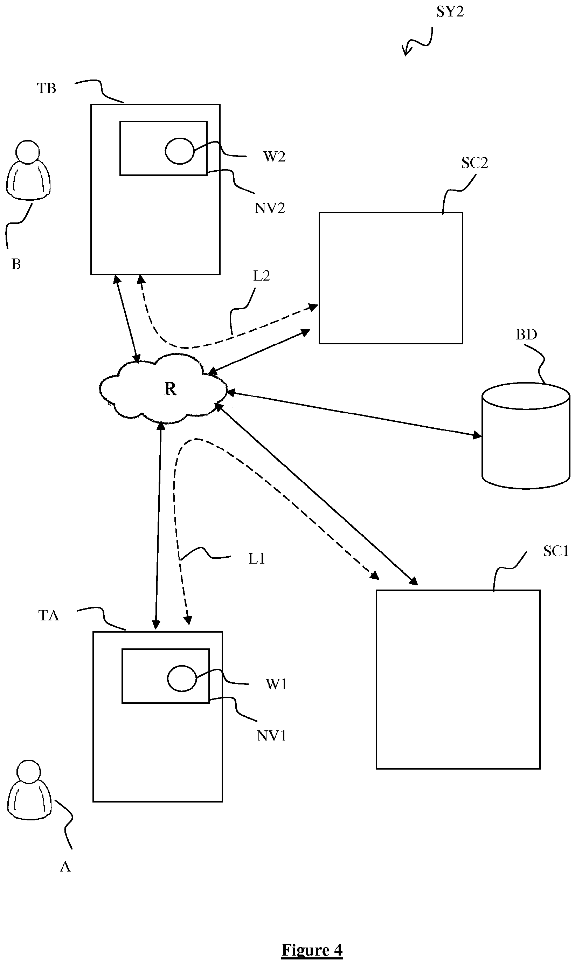

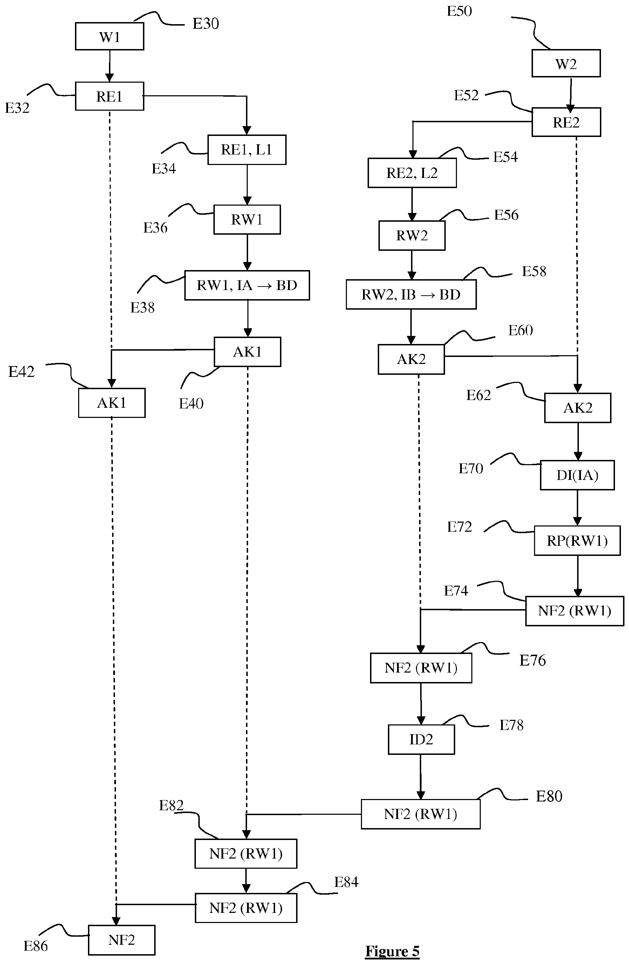

Un deuxième mode de réalisation d'un procédé de communication et d'un procédé de connexion va maintenant être décrit en référence aux figures 4 et 5.

En référence à la **figure 4****,** un système SY2 comprend un premier terminal TA d'un premier utilisateur A, un deuxième terminal TB d'un deuxième utilisateur B, un premier serveur de connexion SC1, un deuxième serveur de connexion SC2, et une base de données BD aptes à communiquer entre eux via un réseau de télécommunication R.

Le premier terminal TA et le deuxième terminal TB sont par exemple des terminaux mobiles. A titre d'alternative, le premier et/ou le deuxième terminal est un ordinateur de type PC.

Le premier terminal TA contient également un premier navigateur NV1.

Le deuxième terminal TB contient un deuxième navigateur NV2.

Un deuxième mode de réalisation d'un procédé de communication et d'un procédé de connexion mis en oeuvre dans le système SY2 va maintenant être décrit en référence à la figure 5.

Lors d'une étape préalable E30, similaire à l'étape E0, suite à une action de l'utilisateur A, une instance d'application web W1 d'une première application web est téléchargée sur le terminal TA.

L'instance d'application reçue W1 comprend en paramètre une adresse AD1 du premier serveur de connexion SC1, par exemple une URL associée au premier serveur de connexion SC1.

Lors d'une étape E32, similaire à l'étape E2, l'instance d'application W1 envoie une requête d'établissement de connexion RE1 au premier serveur de connexion SC1 au moyen de l'adresse AD1 reçue en paramètre lors du téléchargement de l'instance d'application W1.

La requête d'établissement de connexion RE1 est reçue par le premier serveur de connexion SC1 lors d'une étape E34 et le premier serveur de connexion SC1 établit un canal de communication L1 avec le navigateur NV1. Le canal de communication L1 est par exemple une connexion de type Websocket.

Lors d'une étape E36, similaire à l'étape E6, le premier serveur de connexion SC1 détermine un identifiant d'instance RW1. L'identifiant d'instance RW1 comprend un premier identifiant ID1 et un deuxième identifiant ID2. Le premier identifiant ID1 est déterminé par le premier serveur de connexion SC1. Cet identifiant représente de façon unique l'instance d'application web W1 au niveau du premier serveur de connexion SC1.

Le deuxième identifiant permet d'identifier le serveur de connexion SC1 dans le réseau R. Le deuxième identifiant est par exemple le nom de domaine complètement qualifié ou FQDN du premier serveur de connexion SC1.

Lors d'une étape E38, similaire à l'étape E8, le premier serveur de connexion SC1 obtient un identifiant d'utilisateur IA, par exemple une adresse de messagerie attribuée à l'utilisateur A, et commande l'enregistrement de l'identifiant d'instance RW1 en association avec l'identifiant d'utilisateur IA dans la base de données BD.

Lors d'une étape E40, le premier serveur de connexion SC1 envoie un message d'acquittement AK1 à l'instance d'application W1 via le canal de communication L1 et le navigateur NV1.

Le message d'acquittement AK1 est reçu par l'instance d'application W1 lors d'une étape E42.

Les étapes E32 à E42 permettent de réaliser d'une part l'enregistrement de l'instance d'application W1 et d'autre part l'établissement d'un premier canal de communication entre le premier serveur de connexion SC1 et l'instance d'application W1.

Lors d'une étape préalable E50, suite à une action de l'utilisateur B, une instance d'application web W2 d'une deuxième application web est téléchargée sur le deuxième terminal TB.

L'instance d'application reçue W2 comprend en paramètre une adresse AD2 du deuxième serveur de connexion SC2.

Lors d'une étape E52, l'instance d'application W2 envoie une requête d'établissement de connexion RE2 au deuxième serveur de connexion SC2 au moyen de l'adresse AD2.

La requête d'établissement de connexion RE2 est reçue par le deuxième serveur de connexion SC2 lors d'une étape E54 et le serveur de connexion SC2 établit un canal de communication L2 avec le navigateur NV2.

Lors d'une étape E56, le deuxième serveur de connexion SC2 détermine un identifiant d'instance RW2. L'identifiant d'instance RW2 comprend un premier identifiant ID3 et un deuxième identifiant ID4. Le premier identifiant ID3 est déterminé par le deuxième serveur de connexion SC2. Le premier identifiant ID3 représente de façon unique l'instance d'application web W2 au niveau du deuxième serveur de connexion SC2.

Le deuxième identifiant ID4 permet d'identifier le deuxième serveur de connexion SC2. Le deuxième identifiant ID4 est par exemple le nom de domaine complètement qualifié ou FQDN du deuxième serveur de connexion SC2.

Lors d'une étape E58, le deuxième serveur de connexion SC2 obtient un identifiant d'utilisateur IB de l'utilisateur B, par exemple une adresse de messagerie attribuée à l'utilisateur B, et commande l'enregistrement de l'identifiant d'instance RW2 en association avec l'identifiant d'utilisateur IB dans la base de données BD.

Lors d'une étape E60, le deuxième serveur de connexion SC2 envoie un message d'acquittement AK2 à l'instance d'application W2 via le canal de communication L2 et le navigateur NV2.

Le message d'acquittement AK2 est reçu par l'instance d'application W2 lors d'une étape E62.

Les étapes E52 à E62 permettent de réaliser d'une part l'enregistrement de l'instance d'application W2 de la deuxième application et d'autre part l'établissement d'un deuxième canal de communication L2 entre le deuxième serveur de connexion SC2 et l'instance d'application W2.

Les étapes E50 à E62 sont respectivement similaires aux étapes E30 à E42 décrites précédemment. Elles sont toutefois réalisées indépendamment, avant, après ou simultanément aux étapes E30 à E42.

Lors d'une étape E70, réalisée après la réception de l'acquittement AK2 transmis lors de l'étape E62, l'instance d'application W2 envoie une demande d'identifiant d'instance DI à la base de données BD. La demande DI contient l'identifiant d'utilisateur IA de l'utilisateur A.

Lors d'une étape E72, l'instance d'application W2 reçoit une réponse RP à la demande DI. La réponse RP contient l'identifiant d'instance RW1 associé à l'identifiant IA dans la base de données BD.

Dans le cas où l'instance d'application W1 n'est pas enregistrée (étapes E32 à E42 non exécutées), aucun identifiant d'instance est enregistré en association avec l'identifiant d'utilisateur IA dans la base de données BD. L'étape E52 est alors une étape de réception d'un message signalant l'absence de l'identifiant d'instance recherché et le processus s'arrête. A titre d'alternative, aucune réponse n'est reçue.

Lors d'une étape E74, l'instance d'application W2 envoie une notification NF2 contenant l'identifiant d'instance RW1 obtenu à destination de l'instance d'application W1 via le réseau R.

La notification NF2 contient également par exemple un message texte ou vocal formulé par l'utilisateur B.

A titre d'alternative, la notification NF2 est une demande d'établissement d'un flux bidirectionnel audio et/ou vidéo, par exemple une conversation téléphonique, ou la transmission d'un contenu audio et/ou vidéo.

L'instance d'application W2 représente une entité appelante.

La notification NF2 est transmise via le deuxième canal de communication L2.

La notification NF2 est reçue par le deuxième serveur de communication SC2 lors d'une étape E76.

Lors d'une étape E78, le deuxième serveur de connexion SC2 extrait le deuxième identifiant ID2 de l'identifiant d'instance RW1 contenu dans la notification NF2.

Le deuxième identifiant ID2 est ici une adresse du premier serveur de connexion SC1.

Lors d'une étape E80, le deuxième serveur de connexion SC2 transmet la notification NF2 au premier serveur de connexion SC1 en utilisant le deuxième identifiant ID2 extrait.

La notification NF2 est reçue par le premier serveur de communication SC1 lors d'une étape E82.

Lors d'une étape E84, le premier serveur de connexion SC1 transfère la notification NF2 à l'instance d'application W1 via le premier canal de communication L1 en utilisant le premier identifiant ID1 de l'identifiant d'instance RW1 contenu dans la notification NF2.

L'étape E84 comprend l'extraction de la notification NF2 reçue, du premier identifiant ID1 de l'identifiant d'instance RW1.

Lors d'une étape E86, l'instance d'application W1 reçoit la notification NF2.

A titre d'alternative, la notification NF2 est un appel téléphonique et lors de la réception de la notification NF2, l'instance d'application W1 signale l'appel à l'utilisateur du terminal A et si l'utilisateur répond, un processus d'établissement d'appel est exécuté. La communication est par exemple établie selon un protocole WebRTC.

Les étapes E70, E72 et E74, mises en oeuvre par l'instance d'application W2, représentent les étapes du procédé de communication.

Les étapes E32 à E42, mises en oeuvre par le premier serveur de connexion SC1, représentent les étapes d'un procédé de connexion.

Les étapes E52 à E62, mises en oeuvre par le deuxième serveur de connexion SC2, représentent les étapes d'un procédé de connexion.

Dans une variante de réalisation, l'identifiant d'instance RW2 est inséré dans la notification NF2 par le deuxième serveur de notification SC2 lors de l'étape E80. Il est alors transmis au premier serveur de connexion SC1 et, éventuellement à l'instance d'application W1.

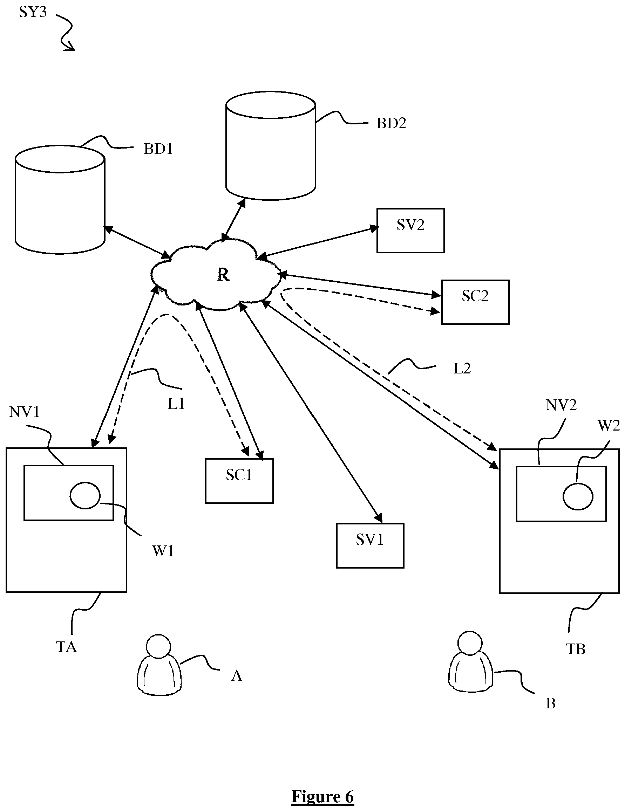

En référence à la **figure 6**, un système SY3 comprend un premier terminal TA d'un premier utilisateur A, un deuxième terminal TB d'un deuxième utilisateur B, un premier serveur de connexion SC1, un deuxième serveur de connexion SC2, un premier serveur de gestion de service SV1, un deuxième serveur de gestion de service SV2, une première base de données BD1 et une deuxième de base de données BD2 aptes à communiquer entre eux via un réseau de télécommunication R.

Le premier terminal TA et le deuxième terminal TB sont par exemple des terminaux mobiles. A titre d'alternative, le premier et/ou le deuxième terminal est un terminal fixe.

Le premier terminal TA contient un premier navigateur NV1.

Le deuxième terminal TB contient un deuxième navigateur NV2.

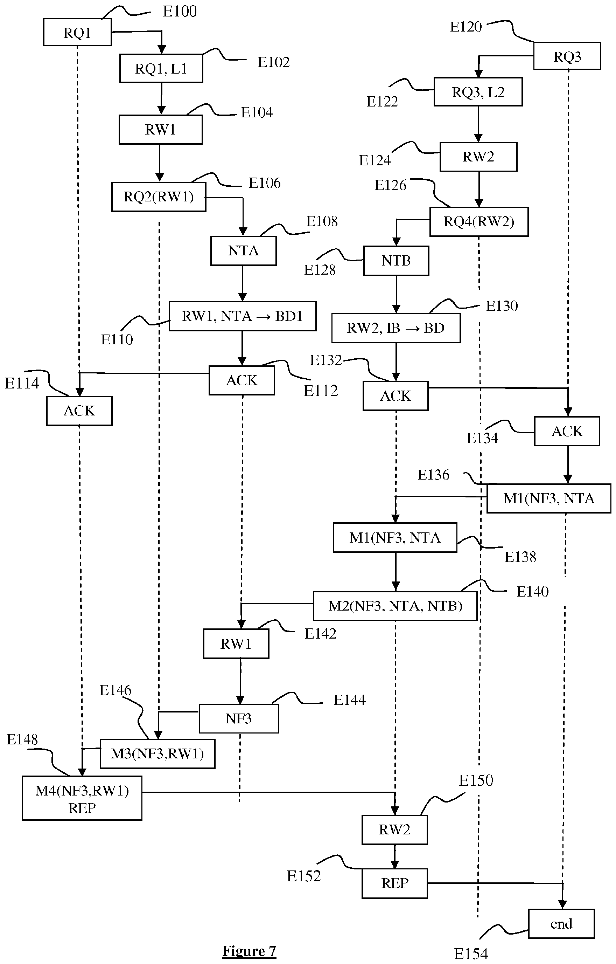

Un troisième mode de réalisation d'un procédé de communication et d'un procédé de connexion mis en oeuvre dans le système SY3 va maintenant être décrit en référence à la figure 7.

Lors d'une étape préalable E100, une instance d'application web W1 téléchargée sur le terminal TA, envoie à destination du premier serveur de connexion SC1 une demande d'établissement de connexion RQ1. La demande RQ1 comprend en paramètre une adresse du premier serveur de gestion de service SV1.

L'adresse du premier serveur de connexion SC1 est par exemple contenue dans l'instance d'application téléchargée.

A titre d'alternative, l'adresse du premier serveur de connexion SC1 est par exemple obtenue par une recherche de type DNS.

La demande d'établissement de connexion RQ1 est reçue par le premier serveur de connexion SC1 lors d'une étape E102 et le premier serveur de connexion SC1 établit un canal de communication L1 avec le premier navigateur NV1.

Lors d'une étape E104, le premier serveur de connexion SC1 détermine un identifiant d'instance RW1. L'identifiant d'instance RW1 comprend un premier identifiant ID1 et un deuxième identifiant ID2. Le premier identifiant ID1 est déterminé par le premier serveur de connexion SC1 et représente de façon unique l'instance d'application web W1 au niveau du premier serveur de connexion SC1. Il permet au premier serveur de connexion SC1 d'identifier l'instance d'application web W1 parmi les instances d'applications qui lui sont connectées.

Le deuxième identifiant ID2 permet d'identifier le premier serveur de connexion SC1 dans le réseau R. Le deuxième identifiant ID2 est par exemple un nom de domaine complètement qualifié (FQDN) associé au premier serveur de connexion SC1.

Lors d'une étape E106, le premier serveur de connexion SC1 transmet une requête de service RQ2 au premier serveur de gestion de service SV1. La requête de service RQ2 comporte l'identifiant d'instance RW1 déterminé lors de l'étape E104.

Lors d'une étape E108, le premier serveur de gestion de service SV1 obtient un identifiant d'utilisateur NTA pour l'utilisateur A. L'identifiant d'utilisateur NTA est par exemple le numéro de téléphone du terminal A.

L'identifiant d'utilisateur NTA est par exemple obtenu en réponse à une requête d'identifiant utilisateur transmise à un serveur d'identité (non représenté) et contenant une preuve d'identité de l'utilisateur A. La preuve d'identité est par exemple obtenue par le terminal TA lors d'une phase préalable d'authentification de l'utilisateur A et transmise dans la demande d'établissement de connexion RQ1 et dans la requête de service RQ2.

A titre d'alternative, l'identifiant d'utilisateur NTA est contenu dans la requête d'établissement de connexion RQ1 et retransmis dans la requête de service RQ2.

Lors d'une étape E110, le premier serveur de gestion de service SV1 vérifie la validité de la requête de service RQ2. Par exemple, il vérifie si l'utilisateur A est autorisé à utiliser les services proposés par le premier serveur de gestion de services SV1.

Si la requête de service RQ2 n'est pas valide, le premier serveur de gestion de service SV1 envoie à l'application web W1, via le premier serveur de connexion SC1 et le canal de communication L1 établi, un message indiquant que la demande est invalide et ordonne au premier serveur de connexion SC1 de mettre fin à la connexion L1 avec le navigateur NV1. Le processus s'arrête.

Si la requête de service RQ2 est valide, le premier serveur de gestion de service SV1 commande l'enregistrement dans la première base de données BD1, de l'identifiant d'instance RW1 en association avec l'identifiant d'utilisateur NTA.

Lors d'une étape E112, le premier serveur de gestion de service SV1 envoie un message d'acquittement AQ1 constituant une preuve de l'enregistrement de l'instance d'application W1, via le premier serveur de connexion SC1 et le canal de communication L1.

Le message d'acquittement AQ1 est reçu par l'instance d'application W1 lors d'une étape E114.

Lors d'une étape préalable E120, une instance d'application d'une deuxième application web W2 téléchargée sur le terminal TB, envoie à destination du deuxième serveur de connexion SC2, une demande d'établissement de connexion RQ3. La demande RQ3 comprend en paramètre une adresse du deuxième serveur de gestion de service SV2.

La demande d'établissement de connexion RQ3 est reçue par le deuxième serveur de connexion SC2 lors d'une étape E122 et le deuxième serveur de connexion SC2 établit un deuxième canal de communication L2 avec le deuxième navigateur NV2.

Lors d'une étape E124, le deuxième serveur de connexion SC2 détermine un deuxième identifiant d'instance RW2. L'identifiant d'instance RW2 comprend un premier identifiant ID3 et un deuxième identifiant ID4. Le premier identifiant ID3 est déterminé par le deuxième serveur de connexion SC2. Le premier identifiant ID3 représente de façon unique l'instance d'application web W2 au niveau du deuxième serveur de connexion SC2. Il permet au deuxième serveur de connexion SC2 d'identifier l'application web W2 parmi les instances d'applications qui lui sont connectées.

Le deuxième identifiant ID4 permet d'identifier le deuxième serveur de connexion SC2 au sein du réseau R. Le deuxième identifiant ID4 est par exemple le nom de domaine complètement qualifié (FQDN) associé au deuxième serveur de connexion SC2.

Lors d'une étape E126, le deuxième serveur de connexion SC2 transmet une deuxième requête de service RQ4 au deuxième service de gestion de service SV2. La deuxième requête de service RQ4 comporte le deuxième identifiant d'instance RW2 déterminé lors de l'étape E124.

Lors d'une étape E128, le deuxième serveur de gestion de service SV2 obtient un identifiant d'utilisateur NTB pour l'utilisateur B. L'identifiant d'utilisateur NTB est par exemple le numéro de téléphone du terminal B.

L'identifiant d'utilisateur NTB est par exemple obtenu en réponse à une requête d'identifiant utilisateur transmise à un serveur d'identité (non représenté) et contenant une preuve d'identité de l'utilisateur B. La preuve d'identité est par exemple obtenue lors d'une phase préalable d'authentification de l'utilisateur B et transmise dans la deuxième demande d'établissement de connexion RQ3 et dans la requête de service RQ4.

A titre d'alternative, l'identifiant d'utilisateur NTB est contenu dans la demande d'établissement de connexion RQ3 et dans la deuxième requête de service RQ4.

Lors d'une étape E130, le deuxième serveur de gestion de service SV2 vérifie la validité de la deuxième requête de service.

Si la requête de service n'est pas valide, le deuxième serveur de gestion de service SV2 envoie à l'instance application web W2, via le deuxième serveur de connexion SC2 et le deuxième canal de communication L2 établi, un message indiquant que la demande est invalide et ordonne au deuxième serveur de connexion SC2 de mettre fin à la connexion L2 avec le navigateur NV2. Le processus s'arrête.

Si la requête de service RQ4 est valide, le deuxième serveur de gestion de service SV2 commande l'enregistrement dans la deuxième base de données BD2, du deuxième identifiant d'instance RW2 en association avec l'identifiant d'utilisateur NTB.

Lors d'une étape E132, le serveur de gestion de service SV2 envoie un message d'acquittement AQ2 constituant une preuve de l'enregistrement de l'instance d'application W2, via le deuxième serveur de connexion SC2 et le canal de communication L2.

Le message d'acquittement AQ2 est reçu par l'instance d'application W2 lors d'une étape E134.

Lors d'une étape E136, l'instance d'application W2 envoie un message M1 au deuxième serveur de gestion de service SV2, via le deuxième canal de communication L2 et le deuxième serveur de connexion SC2.

Le message M1 comprend le numéro de téléphone NTA du terminal TA et une notification NF3. Le numéro de téléphone NTA du terminal A représente un identifiant d'utilisateur. La notification NF3 est par exemple une demande d'établissement d'appel ou une demande d'ouverture d'un canal de communication entre l'instance d'application W1 et l'instance d'application W2.

Lors d'une étape E138, le deuxième serveur de gestion de service SV2 reçoit le message M1.

Lors d'une étape E140, le deuxième serveur de gestion de service SV2 obtient le numéro de téléphone NTB du terminal TB, insère le numéro de téléphone NTB obtenu dans le message M1 et transmet un message M2 correspondant au message M1 ainsi modifié au premier serveur de gestion de service SV1.

Lors d'une étape E142, le premier serveur de gestion de service SV1 extrait du message M2 reçu, le numéro de téléphone NTA et obtient par consultation de la première base de données BD1, l'identifiant d'instance RW1 associé au numéro de téléphone NTA.

Le deuxième identifiant ID2 contenu dans l'identifiant d'instance RW1 obtenu étant associé au premier serveur de connexion SC1, le premier serveur de gestion de service SV1 transmet, lors d'une étape E144, un message M3 contenant la notification NF3, le numéro de téléphone NTB du terminal TB et l'identifiant d'instance RW1 au premier serveur de connexion SC1.

Lors d'une étape E146, le premier serveur de connexion SC1 ayant reçu le message M3, retransmet un message M4 contenant la notification NF3, le numéro de téléphone NTB et l'identifiant d'instance RW1 à l'instance d'application W1, via le canal de communication L1.

A titre d'alternative, l'identifiant d'instance RW1 n'est pas transmis dans le message M4.

Lors d'une étape E148, l'instance d'application W1 reçoit le message M4 et envoie une réponse REP à la notification NF3. La réponse REP est transmise au deuxième serveur de gestion de service SV2, via le premier canal de communication L1, le premier serveur de connexion SC1 et le premier serveur de gestion de service SV1.

Lors d'une étape E150, le deuxième serveur de gestion de service SV2 obtient l'identifiant d'instance RW2 associé au numéro de téléphone NTB dans la deuxième base de données BD2.

Lors d'une étape E152, le deuxième serveur de gestion de service SV2 envoie la réponse REP à l'instance d'application W2, via le deuxième serveur de connexion SC2 et le deuxième canal de communication L2 et établit une communication avec le premier serveur de gestion de service SV1.

La communication établie permet ainsi aux instances d'application W1 et W2 de communiquer.

Lors d'une étape E154, un des interlocuteurs par exemple l'utilisateur B met fin à la communication par exemple au moyen d'une interface graphique du navigateur NV2.

Une requête de fin de communication est transmise au deuxième serveur de gestion de service SV2 qui gère la fin de communication.

Un des utilisateurs peut également demander l'arrêt de l'exécution d'une instance d'application. Une requête de fin de connexion est alors transmise par l'instance d'application au serveur de connexion auquel elle est reliée.

Sur réception de la requête, le serveur de connexion coupe le canal de communication qu'il avait établi avec l'instance d'application.

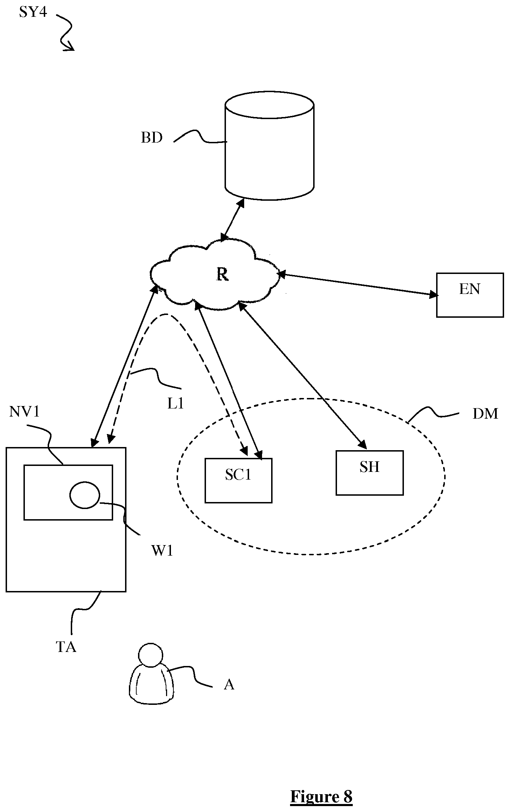

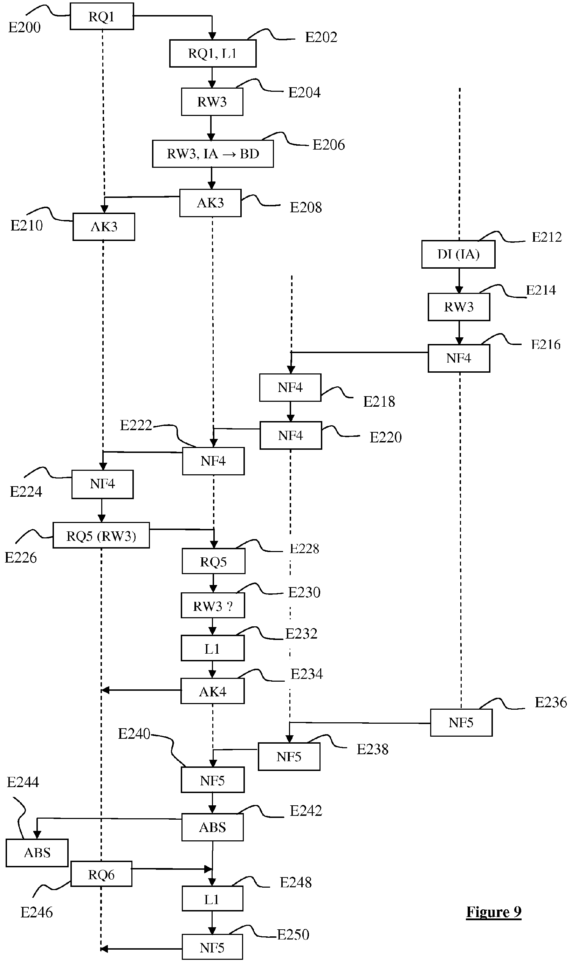

Un quatrième mode de réalisation va maintenant être décrit en référence aux figures 8 et 9.

En référence à la **figure 8**, un système SY4 comprend un terminal TA d'un utilisateur A, un serveur de connexion SC1, un serveur d'accueil SH, une entité appelante EN et une base de données BD aptes à communiquer entre eux via un réseau de communication R.

Le terminal TA est par exemple un terminal mobile.

A titre d'alternative, le terminal A est un terminal fixe.

Le premier terminal TA contient un navigateur NV1.

Le serveur de connexion SC1 et le serveur d'accueil SH appartiennent à un même domaine DM, par exemple le domaine « orange.fr ».

Le serveur d'accueil SH a par exemple pour nom de domaine absolu « accueil.orange.fr ».

Le serveur de connexion SC1 a par exemple pour nom de domaine absolu « serveurSC1.accueil.orange.fr ».

L'entité appelante EN est par exemple un serveur.

La base de données BD est accessible par le serveur de connexion SC1, par le serveur d'accueil SH et par l'entité appelante EN, et plus généralement par toute entité apte à se connecter au réseau R.

Un quatrième mode de réalisation d'un procédé de communication et d'un procédé de connexion mis en oeuvre dans le système SY4 va maintenant être décrit en référence à la figure 9.

Lors d'une étape préalable E200, une instance d'application web W1 téléchargée sur le terminal TA, envoie à destination du serveur de connexion SC1, une demande d'établissement de communication RQ1. La demande comprend en paramètre une adresse du serveur de connexion SC1.

La demande d'établissement de connexion RQ1 est reçue par le serveur de connexion SC1 lors d'une étape E202 et le serveur de connexion SC1 établit un canal de communication L1 avec le navigateur NV1.

Lors d'une étape E204, le serveur de connexion SC1 analyse la demande d'établissement de connexion RQ1 reçue pour déterminer si elle comprend un identifiant d'instance. La demande ne comprenant pas d'identifiant d'instance RW3, le serveur de connexion SC1 commande la détermine d'un identifiant d'instance RW3.

Dans ce mode de réalisation, l'identifiant d'instance RW3 est déterminé par le serveur de connexion SC1.

L'identifiant d'instance RW3 comprend un premier identifiant ID5 et un deuxième identifiant ID6.

Le deuxième identifiant ID6 permet d'identifier le serveur d'accueil SH.

Le deuxième identifiant ID6 est par exemple un nom de domaine « accueil.orange.fr » auquel appartiennent le serveur d'accueil SH et le serveur de connexion SC1.

Le deuxième identifiant ID6 est un nom de domaine relatif pour le serveur de connexion SC1.

A titre d'alternative, le deuxième identifiant est un nom de domaine complètement qualifié (FQDN), par exemple «serveurSC1.accueil.orange.fr ».

Le premier identifiant ID5 est déterminé par le serveur de connexion SC1. Le premier identifiant ID5 est par exemple une chaine de caractères comportant un préfixe identifiant le serveur de connexion SC1, par exemple «serveurSC1 » suivie d'un identifiant IC du canal de communication L1.

Le deuxième identifiant ID6 est un pointeur vers le domaine DM.

Le premier identifiant ID5 constitue un pointeur interne au domaine, vers le serveur de connexion SC1 puis vers le canal de communication L1.

Le premier identifiant ID5 représente de façon unique l'instance d'application web W1 au niveau du domaine DM. Il permet d'une part au serveur d'accueil SH d'identifier le serveur de connexion SC1 auquel l'instance d'application est connectée et d'autre part, au serveur de connexion SC1 d'identifier l'instance d'application web W1 parmi les applications qui lui sont connectées.

Lors d'une étape E206, le serveur de connexion SC1 obtient un identifiant d'utilisateur IA et commande l'enregistrement de l'identifiant d'instance RW3 en association avec l'identifiant d'utilisateur IA dans la base de données BD.

Lors d'une étape E208, le serveur de connexion SC1 envoie un message d'acquittement AK3 à l'instance d'application W1 via le canal de communication L1 et le navigateur NV1.

Le message d'acquittement AK3 constitue une preuve de l'établissement du canal de communication L1 et de l'enregistrement de l'instance d'application W1 au sein du domaine DM.

Le message d'acquittement AK3 contient l'identifiant d'instance RW3.

Le message d'acquittement AK3 est reçu par l'instance d'application W1 lors d'une étape E210 et un message indiquant à l'utilisateur que la connexion est établie est par exemple affiché sur une interface graphique du navigateur NV1.

Lors d'une étape E212, ultérieure à l'étape E210, l'entité appelante EN envoie à la base de données BD une demande DI d'identifiant d'instance pour l'utilisateur A. La demande DI comprend l'identifiant IA de l'utilisateur A.

Lors d'une étape E214, l'entité appelante EN obtient en réponse à la demande DI, l'identifiant d'instance RW3 enregistré en association avec l'identifiant d'utilisateur IA dans la base de données BD.

Lors d'une étape E216, l'entité appelante EN envoie une notification NF4 contenant l'identifiant d'instance RW3 à destination de l'instance d'application W1 via le réseau R.

La notification NF4 contient de façon connue une adresse d'émetteur et une adresse de destination. L'adresse d'émetteur est une adresse de l'entité appelante EN. L'adresse de destination est l'identifiant d'instance RW3.

La notification NF4 contient par exemple un message sous forme d'une chaine de caractères.

A titre d'alternative, la notification NF4 est une demande d'établissement d'un flux bidirectionnel audio et/ou vidéo, par exemple une conversation téléphonique, ou la transmission d'un contenu audio et/ou vidéo.

L'identifiant d'instance RW3, et en conséquence l'adresse de destination de la notification NF4 contient le deuxième identifiant ID6 de l'identifiant d'instance RW3. Le deuxième identifiant ID6 correspondant à une adresse du serveur d'accueil SH, la notification NF4 est transmise au serveur d'accueil SH et reçue par le serveur d'accueil SH, lors d'une étape E218.

Lors d'une étape E220, le serveur d'accueil SH ayant reçu la notification NF4 extrait de l'identifiant d'instance RW3, le premier identifiant ID5 et identifie que l'identifiant d'instance RW3 a été déterminé par le serveur de connexion SC1 à l'aide du préfixe contenu dans le premier identifiant ID5.

Puis, le serveur d'accueil SH transfère la notification NF4 au serveur de connexion SC1.

L'adresse du serveur de connexion SC1 n'est pas connue de l'entité appelante EN.

Lors d'une étape E222, le serveur de connexion SC1 reçoit la notification NF4, détermine à l'aide du premier identifiant ID5 de l'identifiant d'instance RW3 qu'elle est destinée à l'instance d'application W1 et transfère la notification NF4 à l'instance d'application W1 via le canal de communication L1

Lors d'une étape E224, l'instance d'application W1 reçoit la notification NF4 et la notification NF4 est traitée par l'instance d'application W1.

Par exemple, la notification NF4 est un appel téléphonique et lors de la réception de la notification NF4, l'instance d'application W1 signale l'appel à l'utilisateur du terminal A et si l'utilisateur répond, un processus d'établissement d'appel est exécuté. La communication est par exemple établie selon un protocole WebRTC.

Ultérieurement, suite par exemple à un problème réseau, le canal de communication L1 établi entre l'instance d'application W1 et le serveur de connexion SC1 est coupé.

Suite à une détection de la coupure, l'instance d'application W1 transmet, lors d'une étape E226, une nouvelle demande d'établissement de connexion RQ5 à destination du serveur de connexion SC1. La nouvelle demande d'établissement de connexion comprend l'identifiant d'instance RW3.

A titre d'alternative, la nouvelle demande d'établissement de connexion RQ5 est transmise suite à une commande de l'utilisateur A du terminal TA.

Lors d'une étape E228, le serveur de connexion SC1 reçoit la demande d'établissement de connexion RQ5 et extrait de la demande RQ5, l'identifiant d'instance RW3.

Puis, lors d'une étape E230, le serveur de connexion SC1 analyse la demande d'établissement de connexion RQ5 pour déterminer si elle comprend un identifiant d'instance. La demande comprenant l'identifiant d'instance RW3, le serveur de connexion SC1 vérifie si l'identifiant d'instance RW3 est un identifiant qu'il a déterminé précédemment.

Si l'identifiant d'instance RW3 est un identifiant déterminé par le serveur de connexion SC1, le serveur de connexion SC1 rétablit le canal de communication L1 avec le premier navigateur NV1 (étape E232).

L'étape E232 est suivie de l'étape E234 lors de laquelle le serveur de connexion SC1 envoie un message d'acquittement AK4 à l'instance d'application W1 via le canal de communication L1 et le navigateur NV1.

Ainsi, l'instance d'application W1 peut de nouveau recevoir des notifications. Ultérieurement, le canal de communication L1 est de nouveau coupé.

La rupture du canal de communication L1 est par exemple due à un problème réseau ou est provoquée par l'utilisateur A, par exemple par arrêt de l'exécution de l'instance d'application W1 par l'utilisateur.

Lors d'une étape E236, l'entité appelante EN envoie une nouvelle notification NF5 à destination de l'instance d'application W1.

La notification NF5 contient l'identifiant d'instance RW3.

La notification NF5 est reçue par le serveur d'accueil SH lors d'une étape E238.

Le serveur d'accueil SH transfère la notification NF5 au serveur de connexion SC1.

Lors d'une étape E240, la notification NF5 est reçue par le serveur de connexion SC1.

Lors d'une étape E242, le serveur de connexion SC1 détecte que le canal de communication L1 est coupé et envoie une demande de réveil ABS. La demande de réveil ABS signale au terminal TA, l'arrivée d'une notification et l'absence de canal entre le terminal TA et le serveur de connexion SC1.

La demande de réveil ABS est par exemple un message de type SMS (pour « short Message Service » en anglais) ou une notification type « PUSH ».

Lors d'une étape E244, le terminal TA reçoit le message ABS et, soit automatiquement, soit par l'action d'une action utilisateur, l'instance d'application W1 envoie, lors d'une étape E246, une nouvelle demande d'établissement de communication RQ6 comprenant l'identifiant d'instance RW3 à destination du serveur de connexion SC1.

Suite à la réception de la demande d'établissement de connexion RQ6, le serveur de connexion SC1 rétablit le canal de communication L1 avec le navigateur NV1 (étape E248).

Puis lors d'une étape E250, le serveur de connexion SC1 transmet à l'instance d'application W1, la notification NF5.

## Revendications

1. Procédé de communication dans un réseau de télécommunication, entre une entité appelante (EN, W2) et une instance d'une application (W1) téléchargée sur un terminal utilisateur (TA) et connectée à un serveur de connexion (SC1) dudit réseau, **caractérisé en ce qu'**il comporte les étapes suivantes, mises en oeuvre dans une entité (EN, W2, SV1) dudit réseau :
- Obtention (E16, E72, E142, E214), à partir d'un identifiant (IA,NTA) d'un utilisateur destinataire (A), d'un identifiant d'instance (RW1, RW3) d'une instance d'application, ledit identifiant d'instance ayant été déterminé et enregistré en association avec ledit identifiant dudit utilisateur destinataire lors d'une phase de connexion de ladite instance d'application audit serveur de connexion (SC1) et ledit identifiant d'instance comportant un premier (ID1, ID5) et un deuxième identifiant (ID2, ID6), le deuxième identifiant (ID2, ID6) étant un pointeur vers un serveur, dit serveur d'accueil (SC1, SH), apte à se connecter audit réseau, le premier identifiant (ID1, ID3) permettant au serveur d'accueil d'identifier le serveur de connexion si le serveur d'accueil est différent du serveur de connexion et permettant au serveur de connexion d'identifier l'instance d'application parmi les instances d'application connectées au serveur de connexion;
- Transmission (E18, E74, E144, E216) audit serveur d'accueil, en utilisant le deuxième identifiant, d'une notification (NF1, NF2, NF3, NF4) contenant ledit identifiant d'instance, ledit serveur d'accueil étant configuré pour retransmettre ladite notification au serveur de connexion si le serveur d'accueil est différent du serveur de connexion, le serveur de connexion étant apte à identifier ladite instance d'application (W1), au moyen dudit identifiant d'instance obtenu et à transférer ladite notification à l'instance d'application identifiée.

2. Procédé de communication selon la revendication 1 dans lequel l'entité appelante est un serveur, un terminal d'un utilisateur ou une instance d'application installée sur un terminal utilisateur et dans lequel les étapes du procédé de communication sont mises en œuvre par l'entité appelante (EN, W2) ou par un serveur (SV1) accessible par ladite instance.

3. Procédé de communication selon la revendication 1 dans lequel l'étape d'obtention comprend une étape d'envoi (E14) d'une requête d'identifiant d'instance (DI) comprenant ledit identifiant dudit utilisateur (IA) et une étape de réception (E16) d'une réponse à ladite requête contenant ledit identifiant d'instance (RW1).

4. Procédé de communication selon la revendication 1 dans lequel ladite instance d'application est une instance (W1) d'une première application connectée à un premier serveur de connexion (SC1) et l'entité appelante est une instance (W2) d'une deuxième application connectée à un deuxième serveur de connexion (SC2).

5. Procédé de communication selon la revendication 1 dans lequel l'étape d'obtention comprend une étape de réception d'un message contenant l'identifiant d'instance (RW1) transmis par ladite instance d'application (W1).

6. Procédé de connexion mis en oeuvre par un serveur de connexion (SC1), d'un réseau de télécommunication, **caractérisé en ce qu'**il comprend, suite à la réception (E4, E34, E102, E202) d'une demande d'établissement de connexion (RQE, RE1, RQ1) en provenance d'une instance d'une application (W1) téléchargée sur un terminal (TA) d'un utilisateur, une étape (E6, E36, E104, E204) de commande d'une détermination d'un identifiant d'instance (RW1, RW3) d'application pour ladite instance d'application et une étape de commande d'enregistrement de l'identifiant d'instance déterminé en association avec un identifiant dudit utilisateur, ledit identifiant d'instance comportant un premier (ID1, ID5) et un deuxième identifiant (ID2, ID6), le deuxième identifiant étant un pointeur vers un serveur, dit serveur d'accueil (SC1, SH), apte à se connecter audit réseau, le premier identifiant permettant au serveur d'accueil d'identifier le serveur de connexion si le serveur d'accueil est différent du serveur de connexion et permettant au serveur de connexion d'identifier l'instance d'application parmi les instances d'application connectées au serveur de connexion .

7. Procédé de connexion selon la revendication 6 dans lequel le deuxième identifiant est un nom de domaine associé au serveur d'accueil.

8. Procédé de connexion selon la revendication 6 **caractérisé en ce qu'**il comporte une étape de transmission (E106) dudit identifiant de ladite instance en vue de l'enregistrement dudit identifiant d'instance (RW1) en association avec un identifiant d'utilisateur (NTA).

9. Procédé de connexion selon la revendication 6 **caractérisé en ce qu'**il comprend une étape d'analyse (E204, E230) de la demande d'établissement de connexion reçue pour déterminer si elle comprend un identifiant d'instance et **en ce que** l'étape de commande d'une détermination (E204) est exécutée si ladite demande d'établissement de connexion ne comprend pas d'identifiant d'instance.

10. Procédé de connexion selon la revendication 6 **caractérisé en ce qu'**il comprend une étape de réception (E20) d'une notification (NF1) contenant ledit identifiant d'instance, une étape de transmission de ladite notification à ladite instance d'application (W1).

11. Procédé de connexion selon la revendication 10 **caractérisé en ce qu'**il comprend, suite à la réception de la notification, une étape d'envoi (E242) d'une demande de réveil au terminal utilisateur et une étape de réception d'une deuxième demande d'établissement de connexion, ladite demande comportant ledit identifiant d'instance

12. Entité appelante (EN) dans un réseau de télécommunication, **caractérisée en ce qu'**elle comporte :
- un module (OBI) d'obtention, à partir d'un identifiant (IA,NTA) d'un utilisateur destinataire (A), d'un identifiant d'instance (RW1, RW5) d'une instance (W1) d'une application téléchargée sur un terminal utilisateur (TA), ledit identifiant ayant été déterminé et enregistré en association avec ledit identifiant dudit utilisateur destinataire lors d'une phase de connexion de ladite instance d'application à un serveur de connexion (SC1) dudit réseau et ledit identifiant d'instance comportant un premier et un deuxième identifiant, le deuxième identifiant étant un pointeur vers un serveur, dit serveur d'accueil, apte à se connecter audit réseau, le premier identifiant permettant au serveur d'accueil d'identifier le serveur de connexion si le serveur d'accueil est différent du serveur de connexion et permettant au serveur de connexion d'identifier l'instance d'application parmi les instances d'application connectées au serveur de connexion;;
- un module (MTR) de transmission audit serveur d'accueil en utilisant le deuxième identifiant d'une notification (NF1) contenant ledit identifiant d'instance, ledit serveur d'accueil étant configuré pour retransmettre ladite notification au serveur de connexion si le serveur d'accueil est différent du serveur de connexion, le serveur de connexion étant apte à identifier ladite instance d'application (W1), au moyen dudit identifiant d'instance obtenu (RW1) et à transférer ladite notification à l'instance d'application identifiée.

13. Serveur de connexion (SC1) comprenant des moyens de réception d'une demande d'établissement de connexion en provenance d'une instance d'une application téléchargée sur un terminal d'un utilisateur, **caractérisé en ce qu'**il comprend :
- un module (MGI) de commande d'une détermination d'un identifiant d'instance d'application pour ladite instance d'application et une étape de commande d'enregistrement de l'identifiant d'instance déterminé en association avec un identifiant dudit utilisateur, ledit identifiant d'instance comportant un premier et un deuxième identifiant, le deuxième identifiant étant un pointeur vers un serveur, dit serveur d'accueil, apte à se connecter audit réseau, le premier identifiant permettant au serveur d'accueil d'identifier le serveur de connexion si le serveur d'accueil est différent du serveur de connexion et permettant au serveur de connexion d'identifier l'instance d'application parmi les instances d'application connectées au serveur de connexion;.

14. Produit programme d'ordinateur comprenant des instructions pour mettre en oeuvre les étapes d'un procédé de communication selon la revendication 1 et/ou d'un procédé de connexion selon la revendication 6, lorsqu'il est chargé et exécuté par un processeur.

## Patentansprüche

1. Kommunikationsverfahren in einem Telekommunikationsnetz zwischen einer anrufenden Entität (EN, W2) und einer Applikationsinstanz (W1), die auf einem Benutzerendgerät (TA) heruntergeladen und mit einem Verbindungsserver (SC1) des Netzes verbunden ist, **dadurch gekennzeichnet, dass** es die folgenden Schritte umfasst, die in einer Entität (EN, W2, SV1) des Netzes umgesetzt werden:
- Erhalt (E16, E72, E142, E214) einer Instanzkennung (RW1, RW3) einer Applikationsinstanz anhand einer Kennung (IA, NTA) eines Zielbenutzers (A), wobei die Instanzkennung in einer Verbindungsphase der Applikationsinstanz mit dem Verbindungsserver (SC1) in Verbindung mit der Kennung des Zielbenutzers bestimmt und registriert wird und die Instanzkennung eine erste (ID1, ID5) und eine zweite Kennung (ID2, ID6) umfasst, wobei die zweite Kennung (ID2, ID6) ein Zeiger auf einen Empfangsserver (SC1, SH) genannten Server ist, der dazu fähig ist, sich mit dem Netz zu verbinden, wobei die erste Kennung (ID1, ID3) dem Empfangsserver ermöglicht, den Verbindungsserver zu erkennen, wenn der Empfangsserver ein anderer als der Verbindungsserver ist, und dem Verbindungsserver ermöglicht, die Applikationsinstanz unter den Applikationsinstanzen, die mit dem Verbindungsserver verbunden sind, zu erkennen.
- Übermittlung (E18, E74, E144, E216) einer Meldung (NF1, NF2, NF3, NF4), die die Instanzkennung enthält, an den Empfangsserver unter Verwendung der zweiten Kennung, wobei der Empfangsserver dazu konfiguriert ist, die Meldung an den Verbindungsserver rückzuübermitteln, wenn der Empfangsserver ein anderer als der Verbindungsserver ist, wobei der Verbindungsserver dazu fähig ist, die Applikationsinstanz (W1) mithilfe der erhaltenen Instanzkennung zu erkennen und die Meldung an die erkannte Applikationsinstanz zu übermitteln.

2. Kommunikationsverfahren nach Anspruch 1, wobei die anrufende Entität ein Server, ein Endgerät eines Benutzers oder eine auf einem Benutzer-Endgerät installierte Applikationsinstanz ist und wobei die Schritte des Kommunikationsverfahrens durch die anrufende Entität (EN, W2) oder durch einen Server (SV1), der durch die Instanz aufrufbar ist, umgesetzt werden.

3. Kommunikationsverfahren nach Anspruch 1, wobei der Schritt des Erhalts einen Schritt der Sendung (E14) einer Anforderung einer Instanzkennung (DI), die die Kennung des Benutzers (IA) umfasst, und einen Schritt des Empfangs (E16) einer Antwort auf die Anforderung umfasst, die die Instanzkennung enthält (RW1).

4. Kommunikationsverfahren nach Anspruch 1, wobei die Applikationsinstanz eine Instanz (W1) einer ersten Applikation ist, die mit einem ersten Verbindungsserver (SC1) verbunden ist, und die anrufende Entität eine Instanz (W2) einer zweiten Applikation ist, die mit einem zweiten Verbindungsserver (SC2) verbunden ist.

5. Kommunikationsverfahren nach Anspruch 1, wobei der Schritt des Erhalts einen Schritt des Empfangs einer Nachricht ist, die die von der Applikationsinstanz (W1) übermittelte Instanzkennung (RW1) enthält.

6. Verbindungsverfahren, das von einem Verbindungsserver (SC1) eines Telekommunikationsnetzes umgesetzt wird, **dadurch gekennzeichnet, dass** es nach Empfang (E4, E34, E102, E202) einer Anfrage zum Verbindungsaufbau (RQE, RE1, RQ1) von einer Applikationsinstanz (W1), die auf einem Endgerät (TA) eines Benutzers heruntergeladen ist, einen Schritt (E6, E36, E104, E204) des Befehls einer Bestimmung einer Kennung der Applikationsinstanz (RW1, RW3) für die Applikationsinstanz und einen Schritt des Befehls der Registrierung der bestimmten Instanzkennung in Verbindung mit einer Kennung des Benutzers umfasst, wobei die Instanzkennung eine erste (ID1, ID5) und eine zweite Kennung (ID2, ID6) umfasst, wobei die zweite Kennung ein Zeiger auf einen Empfangsserver (SC1, SH) genannten Server ist, der dazu fähig ist, sich mit dem Netz zu verbinden, wobei die erste Kennung dem Empfangsserver ermöglicht, den Verbindungsserver zu erkennen, wenn der Empfangsserver ein anderer als der Verbindungsserver ist, und dem Verbindungsserver ermöglicht, die Applikationsinstanz unter den Applikationsinstanzen zu erkennen, die mit dem Verbindungsserver verbunden sind.

7. Verbindungsverfahren nach Anspruch 6, wobei die zweite Kennung ein Domainname ist, der zum Empfangsserver gehört.

8. Verbindungsverfahren nach Anspruch 6, **dadurch gekennzeichnet, dass** es einen Schritt der Übermittlung (E106) der Kennung der Instanz zur Registrierung der Instanzkennung (RW1) in Verbindung mit einer Benutzerkennung (NTA) umfasst.

9. Verbindungsverfahren nach Anspruch 6, **dadurch gekennzeichnet, dass** es einen Schritt der Analyse (E204, E230) der empfangenen Anfrage zum Verbindungsaufbau umfasst, um zu bestimmen, ob sie eine Instanzkennung umfasst, und dadurch, dass der Schritt des Befehls einer Bestimmung (E204) ausgeführt wird, wenn die Anfrage zum Verbindungsaufbau keine Instanzkennung umfasst.

10. Verbindungsverfahren nach Anspruch 6, **dadurch gekennzeichnet, dass** es einen Schritt des Empfangs (E20) einer Meldung (NF1), die die Instanzkennung enthält, einen Schritt der Übermittlung der Meldung an die Applikationsinstanz (W1) umfasst.

11. Verbindungsverfahren nach Anspruch 10, **dadurch gekennzeichnet, dass** es nach dem Empfang der Meldung einen Schritt der Sendung (E242) einer Weckanfrage an das Benutzer-Endgerät und einen Schritt des Empfangs einer zweiten Anfrage zum Verbindungsaufbau umfasst, wobei die Anfrage die Instanzkennung umfasst.

12. Anrufende Entität (EN) in einem Telekommunikationsnetz, **dadurch gekennzeichnet, dass** sie umfasst:
- ein Modul (OBI) zum Erhalt einer Instanzkennung (RW1, RW5) einer Instanz (W1) einer Applikation, die auf einem Benutzer-Endgerät (TA) heruntergeladen ist, anhand einer Kennung (IA, NTA) eines Zielbenutzers (A), wobei die Kennung in Verbindung mit der Kennung des Zielbenutzers in einer Verbindungsphase der Applikationsinstanz mit einem Verbindungsserver (SC1) des Netzes bestimmt und registriert wird und die Instanzkennung eine erste und eine zweite Kennung umfasst, wobei die zweite Kennung ein Zeiger auf einen Empfangsserver genannten Server ist, der dazu fähig ist, sich mit dem Netz zu verbinden, wobei die erste Kennung dem Empfangsserver ermöglicht, den Verbindungsserver zu erkennen, wenn der Empfangsserver ein anderer als der Verbindungsserver ist, und dem Verbindungsserver ermöglicht, die Applikationsinstanz unter den Applikationsinstanzen, die mit dem Verbindungsserver verbunden sind, zu erkennen;
- ein Modul (MTR) zur Übermittlung einer Meldung (NF1), die die Instanzkennung enthält, an den Empfangsserver unter Verwendung der zweiten Kennung, wobei der Empfangsserver dazu konfiguriert ist, die Meldung an den Verbindungsserver rückzuübermitteln, wenn der Empfangsserver ein anderer als der Verbindungsserver ist, wobei der Verbindungsserver dazu fähig ist, die Applikationsinstanz (W1) mithilfe der erhaltenen Instanzkennung (RW1) zu erkennen und die Meldung an die erkannte Applikationsinstanz weiterzuleiten.

13. Verbindungsserver (SC1), umfassend Mittel zum Empfang einer Anfrage zum Verbindungsaufbau von einer Instanz einer Applikation, die auf einem Endgerät eines Benutzers heruntergeladen ist, **dadurch gekennzeichnet, dass** er umfasst:
- ein Modul (MGI) zum Befehl einer Bestimmung einer Kennung der Applikationsinstanz für die Applikationsinstanz und einen Schritt des Befehls zur Registrierung der bestimmten Instanzkennung in Verbindung mit einer Kennung des Benutzers, wobei die Instanzkennung eine erste und eine zweite Kennung umfasst, wobei die zweite Kennung ein Zeiger auf einen Empfangsserver genannten Server ist, der dazu fähig ist, sich mit dem Netz zu verbinden, wobei die erste Kennung dem Empfangsserver ermöglicht, den Verbindungsserver zu erkennen, wenn der Empfangsserver ein anderer als der Verbindungsserver ist, und dem Verbindungsserver ermöglicht, die Applikationsinstanz unter den Applikationsinstanzen, die mit dem Verbindungsserver verbunden sind, zu erkennen.

14. Computerprogrammprodukt, umfassend Anweisungen zur Umsetzung der Schritte eines Kommunikationsverfahrens nach Anspruch 1 und/oder eines Verbindungsverfahrens nach Anspruch 6, wenn es von einem Prozessor geladen und ausgeführt wird.

## Claims

1. Method for communication, in a telecommunication network, between a caller entity (EN, W2) and an instance of an application (W1) downloaded onto a user terminal (TA) and connected to a connection server (SC1) of said network, **characterized in that** it comprises the following steps, implemented in an entity (EN, W2, SV1) of said network:
- obtaining (E16, E72, E142, E214), on the basis of an identifier (IA, NTA) of a destination user (A), an instance identifier (RW1, RW3) of an application instance, said instance identifier having been determined and stored, in association with said identifier of said destination user, in a phase of connecting said application instance to said connection server (SC1) and said instance identifier comprising a first identifier (ID1, ID5) and a second identifier (ID2, ID6), the second identifier (ID2, ID6) being a pointer to a server, called the host server (SC1, SH), able to connect to said network, the first identifier (ID1, ID3) allowing the host server to identifier the connection server if the host server is different from the connection server and allowing the connection server to identify the application instance among the application instances connected to the connection server;
- transmitting (E18, E74, E144, E216) to said host server, using the second identifier, a notification (NF1, NF2, NF3, NF4) containing said instance identifier, said host server being configured to retransmit said notification to the connection server if the host server is different from the connection server, the connection server being able to identify said application instance (W1) by means of said obtained instance identifier, and to transfer said notification to the identified application instance.

2. Communication method according to Claim 1, wherein the caller entity is a server, a terminal of a user or an application instance installed on a user terminal and wherein the steps of the communication method are implemented by the caller entity (EN, W2) or by a server (SV1) accessible by said instance.

3. Communication method according to Claim 1, wherein the obtaining step comprises a step (E14) of sending a request for an instance identifier (DI) comprising said identifier of said user (IA) and a step (E16) of receiving a response to said request containing said instance identifier (RW1).

4. Communication method according to Claim 1, wherein said application instance is an instance (W1) of a first application connected to a first connection server (SC1) and the caller entity is an instance (W2) of a second application connected to a second connection server (SC2) .

5. Communication method according to Claim 1, wherein the obtaining step comprises a step of receiving a message containing the instance identifier (RW1) transmitted by said application instance (W1).

6. Connection method implemented by a connection server (SC1), of a telecommunication network, **characterized in that** it comprises, following the reception (E4, E34, E102, E202) of a request (RQE, RE1, RQ1) to set up a connection originating from an instance of an application (W1) downloaded onto a terminal (TA) of a user, a step (E6, E36, E104, E204) of commanding a determination of an application-instance identifier (RW1, RW3) for said application instance and a step of commanding storage of the determined instance identifier in association with an identifier of said user, said instance identifier comprising a first identifier (ID1, ID5) and a second identifier (ID2, ID6), the second identifier being a pointer to a server, called the host server (SC1, SH), able to connect to said network, the first identifier allowing the host server to identifier the connection server if the host server is different from the connection server and allowing the connection server to identify the application instance among the application instances connected to the connection server.

7. Connection method according to Claim 6, wherein the second identifier is a domain name associated with the host server.

8. Connection method according to Claim 6, **characterized in that** it comprises a step (E106) of transmitting said identifier of said instance with a view to storing said instance identifier (RW1) in association with a user identifier (NTA).

9. Connection method according to Claim 6, **characterized in that** it comprises a step (E204, E230) of analyzing the received request to set up a connection in order to determine whether it comprises an instance identifier and **in that** the step (E204) of commanding a determination is executed if said request to set up a connection does not comprise an instance identifier.

10. Connection method according to Claim 6, **characterized in that** it comprises a step (E20) of receiving a notification (NF1) containing said instance identifier, and a step of transmitting said notification to said application instance (W1).

11. Connection method according to Claim 10, **characterized in that** it comprises, following reception of the notification, a step (E242) of sending a wake-up request to the user terminal and a step of receiving a second request to set up a connection, said request comprising said instance identifier

12. Caller entity (EN) in a telecommunication network, **characterized in that** it comprises:
- a module (OBI) for obtaining, on the basis of an identifier (IA, NTA) of a destination user (A), an instance identifier (RW1, RW5) of an instance (W1) of an application downloaded onto a user terminal (TA), said identifier having been determined and stored, in association with said identifier of said destination user, in a phase of connecting said application instance to a connection server (SC1) of said network, and said instance identifier comprising a first identifier and a second identifier, the second identifier being a pointer to a server, called the host server, able to connect to said network, the first identifier allowing the host server to identifier the connection server if the host server is different from the connection server and allowing the connection server to identify the application instance among the application instances connected to the connection server;
- a module (MTR) for transmitting to said host server, using the second identifier, a notification (NF1) containing said instance identifier, said host server being configured to retransmit said notification to the connection server if the host server is different from the connection server, the connection server being able to identify said application instance (W1) by means of said obtained instance identifier (RW1), and to transfer said notification to the identified application instance.

13. Connection server (SC1) comprising means for receiving a request to set up a connection originating from an instance of an application downloaded onto a terminal of a user, **characterized in that** it comprises:
- a module (MGI) for commanding a determination of an application-instance identifier for said application instance and a step of commanding storage of the determined instance identifier in association with an identifier of said user, said instance identifier comprising a first identifier and a second identifier, the second identifier being a pointer to a server, called the host server, able to connect to said network, the first identifier allowing the host server to identify the connection server if the host server is different from the connection server and allowing the connection server to identify the application instance among the application instances connected to the connection server.

14. Computer-program product comprising instructions for implementing the steps of a communication method according to Claim 1 and/or of a connection method according to Claim 6, when it is loaded and executed by a processor.
